Europäisches Patentamt

European Patent Office

Office européen des brevets

(11) Veröffentlichungsnummer: **0 380 450**
**A2**

(12) **EUROPÄISCHE PATENTANMELDUNG**

(21) Anmeldenummer: **90810063.9**

(22) Anmeldetag: **25.01.90**

(51) Int. Cl.5: **A47J 31/42, A47J 42/50**

(30) Priorität: **27.01.89 CH 260/89**

(43) Veröffentlichungstag der Anmeldung:
**01.08.90 Patentblatt 90/31**

(84) Benannte Vertragsstaaten:
**AT CH DE ES FR IT LI**

(71) Anmelder: **Jura Elektroapparate-Fabriken L. Henzirohs AG**
**Bahnhofstrasse 135**
**CH-4626 Niederbuchsiten(CH)**

(72) Erfinder: **Scherer Benjamin**
**Anemonenstrasse 30**
**CH-8047 Zürich(CH)**
Erfinder: **Ackermann Anton**
**Hauptstrasse 374**
**CH-4855 Wolfwil(CH)**

(74) Vertreter: **Tschudi, Lorenz et al**
**Bovard AG Patentanwälte VSP**
**Optingenstrasse 16**
**CH-3000 Bern 25(CH)**

(54) **Kaffeemaschine.**

(57) Die Kaffeemaschine umfasst eine Brühvorrichtung (3) sowie eine Mahl- und Dosiervorrichtung (4). Ein Behälter (16) für die Kaffeebohnen ist durch eine Trennwand (13) in zwei Abteile (14, 15) unterteilt. Mittels von Zugmagneten betätigten Schiebern kann wahlweise die gewünschte Kaffeebohnenmenge der gewünschten Sorte einem der Abteile (14, 15) entnommen, der Dosiereinheit (17) und anschliessend dem Mahlwerk (18) zugeführt werden. Der in einem Rotor (6) der Brühvorrichtung (3) längsbeweglich geführte Zylinder (7) ist vorzugsweise in einen Zylindermantel und einen Zylinderstössel zwecks Schaffung einer variablen Brühkammer unterteilt.

FIG. 1

EP 0 380 450 A2

## KAFFEEMASCHINE

Die vorliegenden Erfindung betrifft eine Kaffeemaschine mit einem Gehäuse, einem Frischwasseranschluss bzw. einem Frischwasservorratstank, einem Heizorgan zur Erhitzung des Frischwassers, einem Mittel zur Förderung des erhitzten Frischwassers zu einer Brühvorrichtung mit einem Getränkeauslass, einem Behälter für Kaffeebohnen, einem Mahlwerk für die Kaffeebohnen sowie mit Antriebs-und Steuermitteln für die Brühvorrichtung und das Mahlwerk.

Aus der EP-A- 0 154 206 ist eine Vorrichtung zur Zubereitung von Heissgetränken, insbesondere von Kaffee, vorbekannt, welche den Nachteil aufweist, dass nur aus einer einzigen in der Kaffeemaschine befindlichen Kaffeebohnensorte Kaffee zubereitet werden kann.

Es ist deshalb eine Aufgabe der vorliegenden Erfindung, eine Kaffeemaschine zu schaffen, mit welcher mindestens zwei verschiedene Kaffeesorten zubereitet werden können. Dies wird erfindungsgemäss erzielt durch die kennzeichnenden Merkmale des Patentanspruches 1.

Es ist eine weitere Aufgabe der vorliegenden Erfindung, eine Kaffeemaschine zu schaffen, bei welcher beim Wechsel von einer Kaffeesorte auf die andere von der vorher verwendeten Sorte nichts im Mahlwerk bzw. Umsetzer verbleibt, so dass der zubereitete Kaffee nur aus einer der zur Verfügung stehenden Sorten besteht. Dies wird erfindungsgemäss erzielt durch die kennzeichnenden Merkmale des Patentanspruches 3.

Es ist weiterhin eine Kaffeemaschine mit einer variablen Brühkammer vorbekannt, bei welcher die Brühvorrichtung mit einem Linearantrieb angetrieben wird. Die variable Brühkammer dieser vorbekannten Vorrichtung weist den Nachteil auf, dass die zum Brühen des Kaffees verwendete Kaffeepulvermenge nur im Bereich von etwa 7 bis 8 Gramm variiert werden kann. Im weiteren wird durch den Linearantrieb die Bauweise der Brühvorrichtung voluminös.

Es ist deshalb eine weitere Aufgabe der vorliegenden Erfindung, eine Kaffeemaschine mit einer wesentlich kompakter gebauten Brühvorrichtung als bei der oben erwähnten Kaffeemaschine gemäss dem Stand der Technik zu schaffen. Dies wird erfindungsgemäss durch die kennzeichnenden Merkmale des Patentanspruches 5 erzielt.

Weiterhin ist es eine Aufgabe der vorliegenden Erfindung, eine oben erwähnte bekannte Kaffeemaschine mit einer variablen Brühkammer dahingehend zu verbessern, dass die zu brühende Kaffeepulvermenge in einem wesentlich grösseren Bereich variiert werden kann. Dies wird erfindungsgemäss erzielt durch die kennzeichnenden Merkmale des Patentanspruches 8.

Im weiteren ist es eine Aufgabe der vorliegenden Erfindung, eine Kaffeemaschine zu schaffen, bei welcher das Volumen der Brühkammer beim Brühvorgang konstant bleibt. Dies wird erfindungsgemäss erzielt durch die kennzeichnenden Merkmale des Patentanspruches 9.

Die erfindungsgemässe Maschine kann zur Reinigung auf einfach Art und Weise zerlegt werden. Dies ist wichtig, da das ausgelaugte Kaffeepulver leicht zur Schimmelbildung führen kann. Im weiteren ist es möglich, mehrere Kaffeemaschinentypen zu bauen. Ein erster Typ umfasst ein Mahlsystem, mit welchem unter mindestens zwei Kaffeesorten ausgewählt werden kann, wobei die Brühvorrichtung entsprechend dem Stand der Technik ausgebildet ist. Bei einem weiteren Kaffeemaschinentyp ist die Brühvorrichtung ebenfalls erfindungsgemäss ausgebildet. Bei einem dritten Kaffeemaschinentyp schliesslich kann nebst der Wahl der Sorten auch noch die Kaffeemenge gewählt werden, wobei die Brühvorrichtung in diesem Falle erfindungsgemäss ausgebildet ist.

Im folgenden werden anhand der beiliegenden Zeichnung Ausführungsbeispiele der Erfindung sowie deren Verwendung näher beschrieben. Es zeigen:

**Fig. 1** eine schematische Darstellung der wesentlichen Elemente eines ersten Ausführungsbeispiels der Kaffeemaschine,

**Fig. 2** einen Aufriss eines zweiten Ausführungsbeispiels der Kaffeemaschine,

**Fig. 3** einen Seitenriss des zweiten Ausführungsbeispiels der Kaffeemaschine, teilweise geschnitten,

**Fig. 4** eine Ansicht des zweiten Ausführungsbeispiels der Kaffeemaschine von oben, ohne Deckel,

**Fig. 5** eine Ansicht des zweiten Ausführungsbeispiels von hinten,

**Fig. 6** die Brühvorrichtung des ersten Ausführungsbeispieles während der Funktionsphase "Beladen",

**Fig. 7** die Brühvorrichtung des ersten Ausführungsbeispieles während der Funktionsphase "Brühen",

**Fig. 8** die Brühvorrichtung des ersten Ausführungsbeispieles während der Funktionsphase "Auswerfen",

**Fig. 9** eine Detailansicht der Brühvorrichtung des ersten, Ausführungsbeispiels mit den auf einer Ständerplatte befindlichen Steuerkurven,

**Fig. 10** eine Seitenansicht des Rotors des ersten Ausührrungsbeispiels der Brühvorrichtung,

**Fig. 11** einen Schnitt gemäss Linie XI-XI der Fig. 10,

**Fig. 12** eine Ansicht der Ständerplatte mit den Steuerkurven für den Nocken des Zylinderstössels, den mit der Schwinge zusammenwirkenden Bolzen und den Kopfteil,

**Fig. 13** einen Schnitt gemäss Linie XIII-XIII der Fig. 12,

**Fig. 14** einen Schnitt gemäss Linie XIV-XIV der Fig. 12,

**Fig. 15** eine perspektivische Explosionsansicht der Brühvorrichtung des ersten Ausführungsbeispieles,

**Fig. 16** ein Schema der Abschalteinheit für das Mahlwerk.

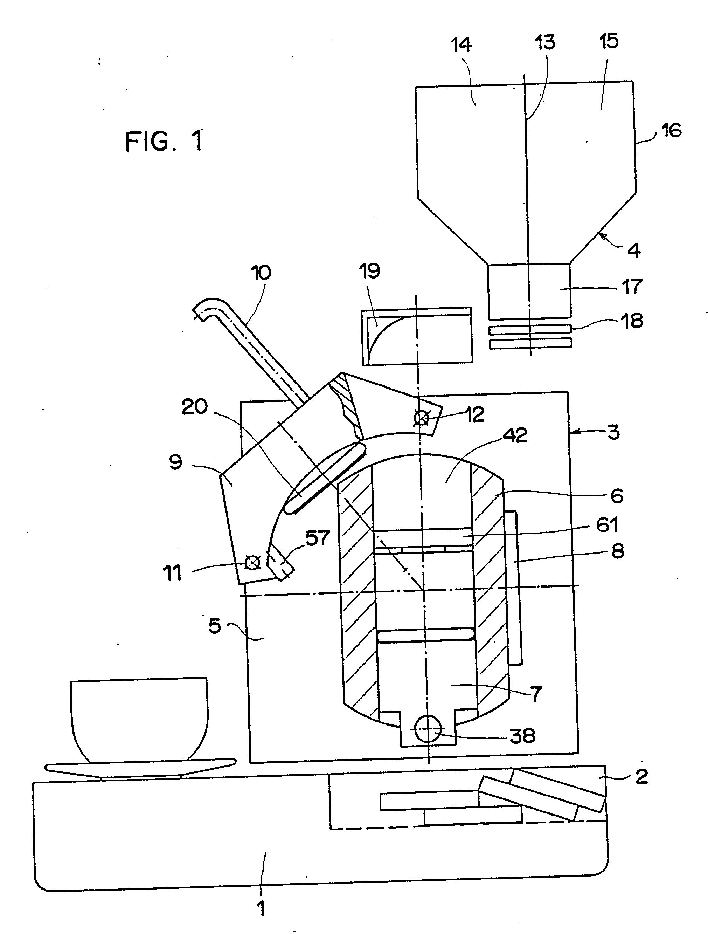

In Fig. 1 ist schematisch ein erstes Ausführungsbeispiel der Kaffeemaschine dargestellt. Diese umfasst einen Unterteil 1 mit einem Kaffeesatzbehälter 2, eine Brühvorrichtung 3 sowie eine Dosier- und Mahlvorrichtung 4. Die Brühvorrichtung weist einen Ständer 5 auf, an welchem ein Rotor 6 drehbar befestigt ist. Innerhalb des Rotors 6 ist ein Zylinder 7 mit einem Zylindermantel und einem Zylinderstössel längsbeweglich angeordnet. Seitlich am Rotor 6 ist eine Schwinge 8 angeordnet, welche während des Brühvorgangs zum Blockieren des Zylinders dient. Im weiteren ist am Ständer 5 der Kopfteil 9 mit dem Kaffeeausgaberohr 10 befestigt. Der Kopfteil 9 ist in jedem Ständerteil mit je zwei an ihm befestigten Stiften 11 und 12 in je zwei Steuerkurven beweglich gelagert und wird durch nicht dargestellte Federn in eine Ruhestellung gebracht. Die Dosier- und Mahlvorrichtung umfasst einen durch eine Seitenwand 13 in zwei Abteile 14 und 15 unterteilten Behälter 16. In die eine Hälfte des Behälters können beispielsweise koffeinhaltige und in die andere Hälfte koffeinfreie Kaffeebohnen eingefüllt werden. Mit einem nicht dargestellten Betätigungsknopf kann die Kaffeesorte ausgewählt werden, wobei in einer Dosiervorrichtung 17 die Menge der Kaffeeportion ebenfalls mit einem nichtdargestellten Hebel eingestellt werden kann. Unterhalb der Dosiervorrichtung 17 ist ein Mahlwerk 18 angeordnet, welches beispielsweise ein Scheiben- oder ein Kegelmahlwerk sein kann. Zwischen dem Mahlwerk 18 und der Brühvorrichtung 3 ist ein Umsetzer 19 angeordnet, welcher das Kaffeepulver vom Mahlwerk 18 in den Bereich der oberhalb des Zylinders 7 im Rotor 6 angeordneten Brühkammer 42 befördert. Am Kopfteil 9 ist weiterhin eine Siebplatte 20 angeordnet. Während des Brühvorganges ist die Siebplatte 20 auf der Brühkammer 42 befindlich. Der Kopfteil 9 wird während des Brühvorganges durch einen Mitnehmer 57 mit dem Rotor 6 bewegt.

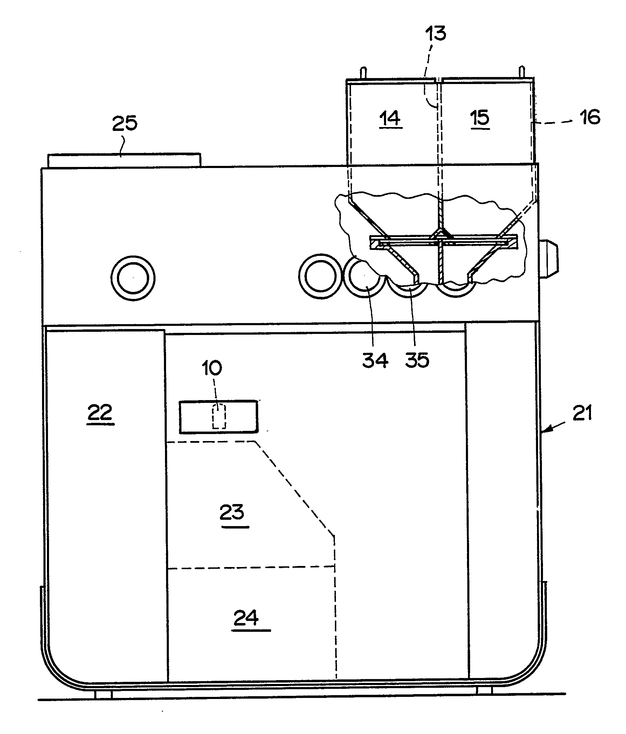

In den Fig. 2 - 5 ist ein zweites Ausführungsbeispiel einer Kaffeemaschine dargestellt, welche dasselbe Mahlwerk wie das erste Ausführungsbeispiel aufweist, wobei jedoch die Brühvorrichtung beispielsweise aus der EP-A-0 154 206 bekannt ist.

Aus Fig. 2 ist ein Aufriss der Kaffeemaschine ersichtlich. Innerhalb eines Gehäuses 21 sind ein Wassertank 22, ein Tresterbehälter 23 und eine Wasserschale 24 befindlich. Aus dieser Fig. ist weiterhin der Behälter 16 mit den durch die Trennwand 13 abgetrennten Abteilen 14 und 15 für die verschiedenen Kaffeesorten ersichtlich. Im weiteren ist aus dieser Fig. das Kaffeeausgaberohr 10 ersichtlich.

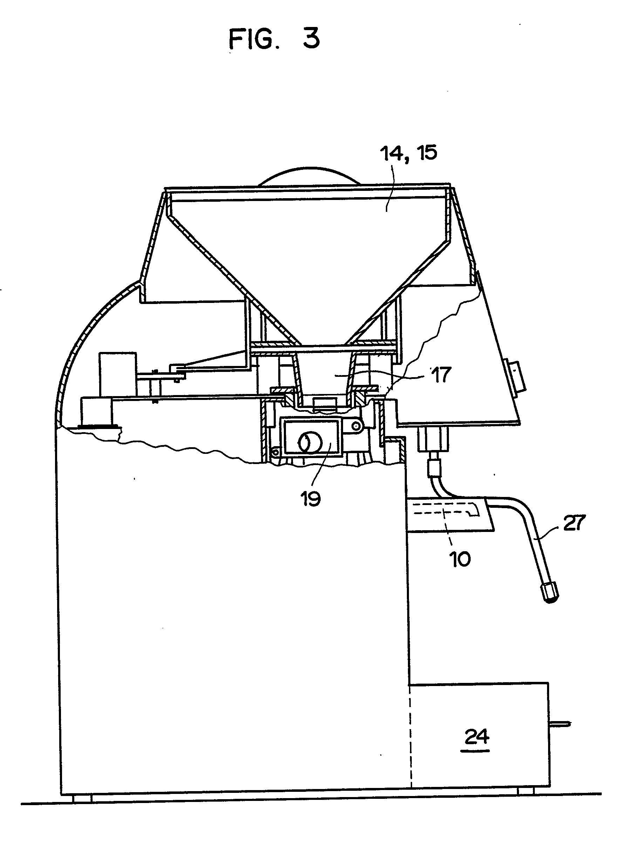

Aus Fig. 3 ist ein Seitenriss, geschnitten, im Bereich des Einfüllbehälters für die Kaffeebohnen ersichtlich. Nebst dem Kaffeeausgaberohr 10 ist ein Rohr 27 zur Abgabe von heissem Wasser angeordnet.

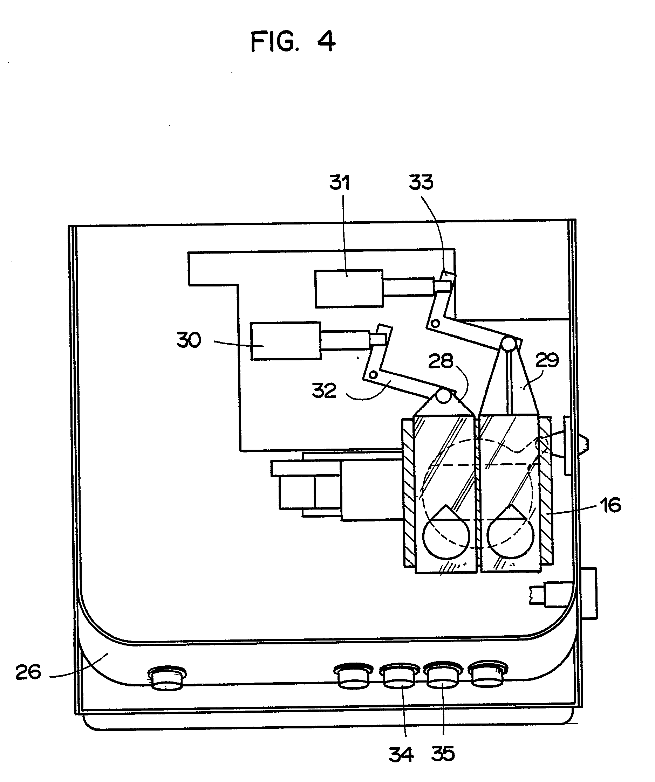

Aus Fig. 4 ist eine Ansicht von oben der Kaffeemaschine mit abgenommenem Deckel ersichtlich. Zwei Schieber 28 und 29 unten am Aufnahmetrichter für die Kaffeebohnen werden durch Zugmagnete 30 und 31 über Winkel 32 und 33 betätigt. An der Frontplatte 26 sind unter anderem die beiden Betätigungsschalter 34 und 35 für die Schieber 28 und 29 angeordnet.

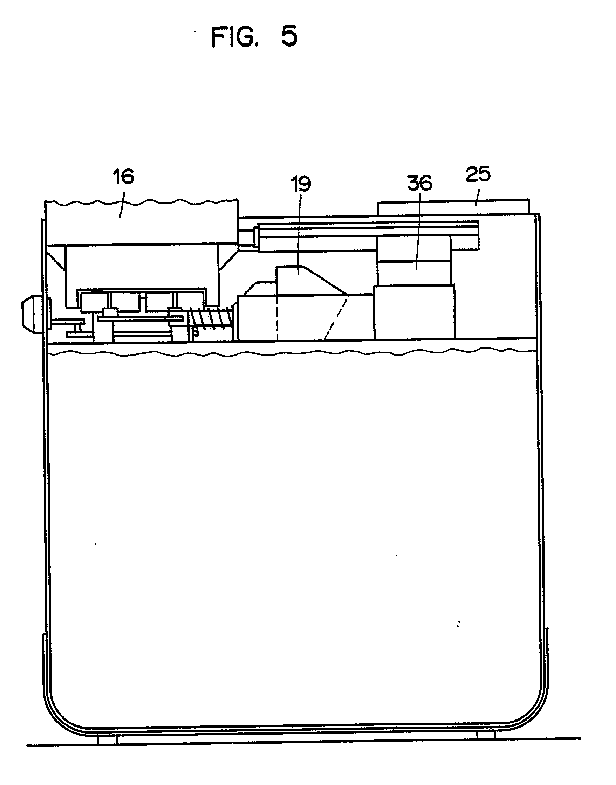

In Fig. 5 ist eine Ansicht von hinten bei abgenommener Rückwand der Kaffeemaschine dargestellt. Aus dieser Darstellung ist der Programmschalter 36 sowie der Umsetzer 19 ersichtlich.

Die Funktionsweise des Ausführungsbeispieles gemäss den Fig. 2 - 5 wird im folgenden näher beschrieben:

Zu Beginn befinden sich die Bohnen im Behälter 16 mit zwei Abteilen 14 und 15. Bei Betätigung des Schalters 34 oder 35 öffnet sich wahlweise der Schieber 28 oder 29, wobei die Bohnen in die Dosiereinheit 17 gelangen. Nach einer bestimmten Zeit, gesteuert durch einen Programm schalter 36, schliesst sich der Schieber wieder. Dadurch ist die Bohnenmenge definiert. Ist der Schieber 28 oder 29 geschlossen, wird über den Programmschalter 36 das Mahlwerk 18 aktiviert. Die Mahlwerksteuerung erkennt über den Verlauf der Stromaufnahme, wann die letzte Bohne gemahlen ist. Dies wird automatisch dem Programmschalter 36 gemeldet. Der Programmschalter seinerseits aktiviert den Umsetzer 19. Der Umsetzer öffnet sich und befördert das frischgemahlene Kaffeepulver in die offene Brühkammer.

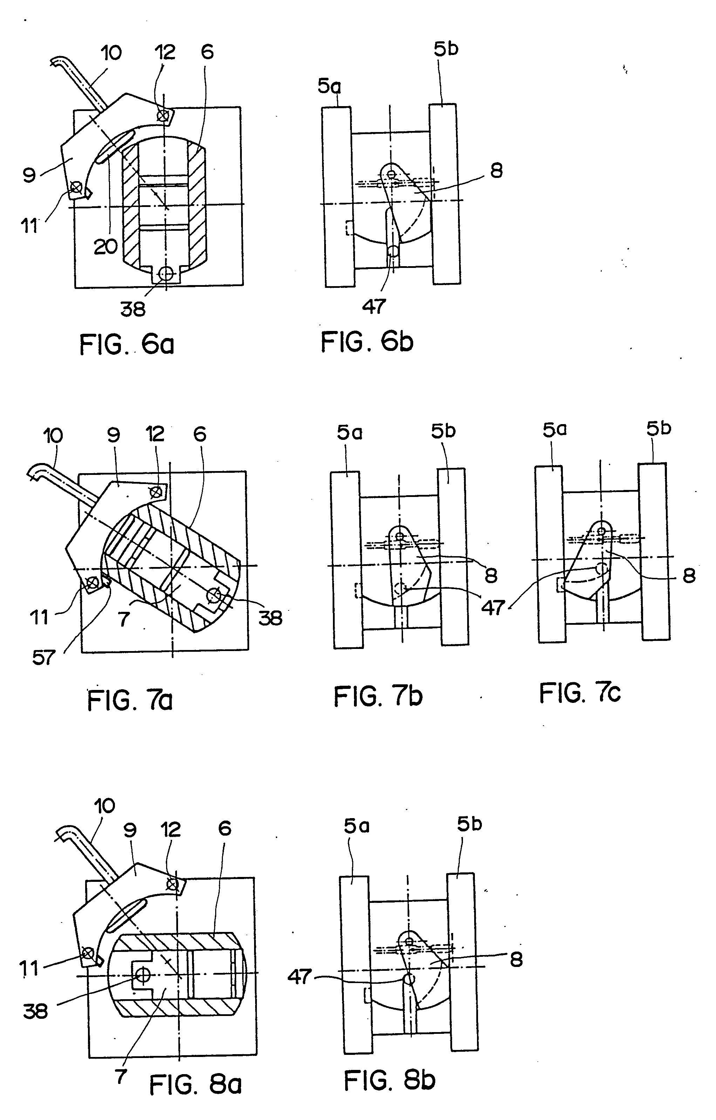

In den Fig. 6 - 8 sind drei Stellungen des Rotors 6 sowie der Schwinge 8 für die drei verschiedenen Funktionsphasen dargestellt. In Fig. 6 befindet sich der Rotor 6 in der Beladestellung, d.h. es wird ihm über den Umsetzer 19 das Kaffeepulver der gewünschten Sorte zugeführt. Die Schwinge 8 befindet sich in einer neutralen Stellung. Wenn der Rotor in die Brühstellung gemäss Fig. 7 verdreht wird, so kann der Brühvorgang stattfinden. Der Zylinder 7 wird nun in Richtung des Kaffeeausgaberohres 10 verschoben. Dabei bewegt sich ein seitlich herausragender, mit dem Zylindermantel verbundener Nocken 47 in Richtung Brühkammer. Die Schwinge gleitet über den Nocken 47 und blockiert mit einem Bolzen 39 den Zylindermantel in der Brühstellung. Diese Konstanthaltung des Druckes während dem Brühvorgang gewährleistet eine bessere Bildung des feinen Schaumes auf der Oberfläche des Kaffees. In der Brühkammer herrscht während des Brühvorganges ein Druck von etwa 15 bar. Gemäss Fig. 8 befindet sich der Rotor 6 in der Auswerfstellung, der Zylinder befindet sich ganz rechts, wobei das ausgelaugte Kaffeepulver ausgestossen wird. Die Schwinge 8 befindet sich wieder in einer neutralen Stellung. Durch die Ausführung einer Rotationsbewegung anstel le einer Linearbewegung wie bei bekannten Vorrichtungen kann eine kompakte Bauweise der Brühvorrichtung erzielt werden.

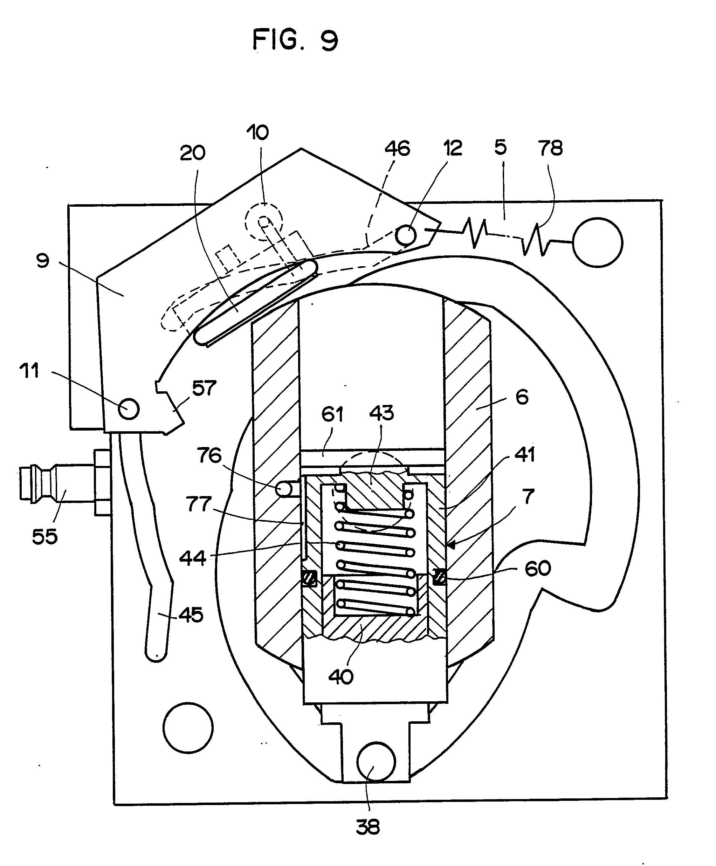

Aus Fig. 9 ist insbesondere der Verlauf der Steuerkurve 39 für den mit dem Zylinderstössel 40 verbundenen Nocken 38 ersichtlich. Der Zylindermantel 41 sowie der Stössel 40 bilden zusammen den Zylinder 7. Damit sich die Brühkammer der jeweiligen Kaffeepulvermenge anpasst, ist zwischen dem Kopf 43 des Zylindermantels 41 und dem Zylinderstössel 40 eine Feder 44 angeordnet. Der Kopfteil 9 wird mit den Stiften 11 und 12 in zwei Steuerkurven 45 und 46 beweglich geführt. Während der Rotation des Rotors 9 erfolgt die Steuerung des Zylinders 7 durch den in der Steuerkurve 39 geführten Nocken 38, wobei sich auch der Kopfteil 9 entsprechend der Rotorbewegung entlang der Steuerkurven 45 und 46 bewegt. Ueber einen Wasseranschluss 55, eine Bohrung 76 und eine Nut 77 wird das Brühwasser zugeführt. Eine Feder 78 dient zur Rückstellung des Kopfes 9.

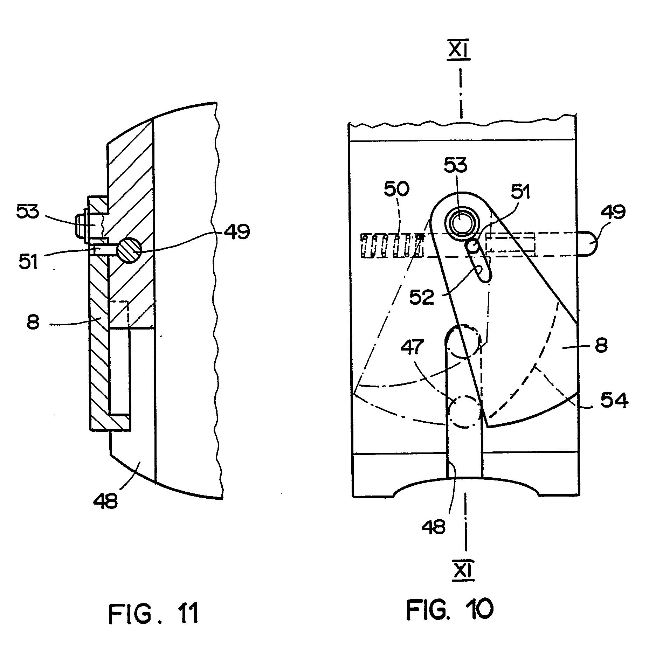

Aus Fig. 10 ist eine Draufsicht insbesondere auf die Schwinge 8 ersichtlich, wobei dieselbe in neutraler Stellung ausgezogen und in der Blockierstellung strichpunktiert eingezeichnet ist. Wenn sich die Schwinge 8 zu Beginn des Brühvorganges in neutraler Stellung befindet, was dann der Fall ist, wenn sich der mit dem Zylindermantel verbundene Nocken 47 unten in einer Ausnehmung 48 befindet, so befindet sich ein Bolzen 49, welcher in eine Nut 56 im Ständer 5 eingreift, in der ausgezogenen Lage. Der Bolzen 49 ist durch eine Feder 50 federbelastet angeordnet. Ein mit dem Bolzen 49 verbundener Stift 51 greift in eine Ausnehmung 52, die sich benachbart dem Lager 53 der Schwinge 8 befindet, ein. In der Blockierstellung wird der Nocken 47 durch eine Steuerkurve 54 an der Schwinge arretiert.

Aus Fig. 11 ist ein Schnitt gemäss Linie XI-XI der Fig. 10 ersichtlich.

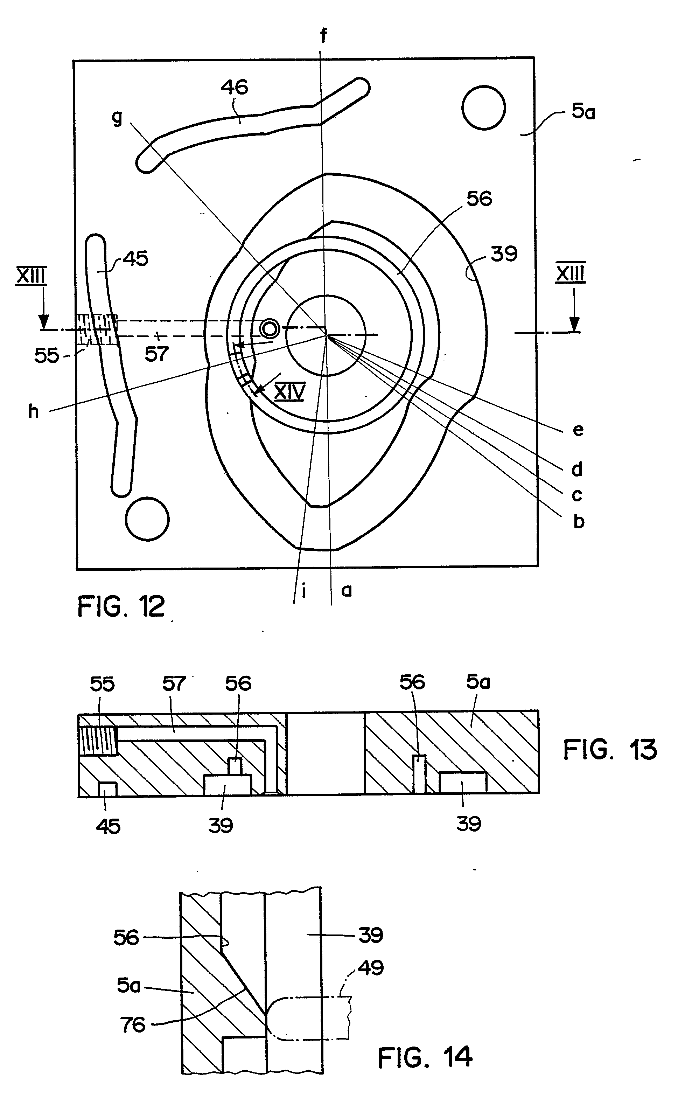

Fig. 12 zeigt eine Ansicht einer Ständerplatte 5 mit der Steuerkurve 39 für den mit dem Zylinderstössel 40 verbundenen Nocken 38, den Steuerkurven 45 und 46 für den Kopfteil 9 sowie der Steuerkurve 56 für den Bolzen 49. In der folgenden Tabelle sind die Nockenstellung, der Drehwinkel des Rotors sowie die Funktionen angegeben.

| Nockenstellung | Winkel (°) | Funktion |
|---|---|---|
| a | 0 | einfüllen |
| a - b | ---- | verdrehen |
| b | 51,5 | --- |
| c | 55,5 | brühen |
| d | 59,5 | --- |
| d - e | | ablösen |
| e | 66,5 | --- |
| f | 180 | --- |
| f - g | ---- | ausstossen |
| g | 220 | --- |
| h | 285 | --- |
| h - i | ---- | zurückziehen |
| i | 353 | |
| a | 0 | einfüllen |

Aus Fig. 13 ist ein Schnitt gemäss Linie XIII-XIII der Fig. 12 ersichtlich. Die Steuerkurve 56 ist gegenüber der Stuerkurve 39 vertieft angeordnet. Ueber den Wasseranschluss 55 sowie eine Leitung 57 wird das Brühwasser der Brühkammer zugeführt.

Aus Fig. 14 ist ein Schnitt gemäss Linie XIV-XIV der Fig. 12 ersichtlich. Die Steuerkurve 56 für den mit der Schwinge zusammenwirkenden Bolzen 49 weist im Bereich von h eine Erhebung 76 auf.

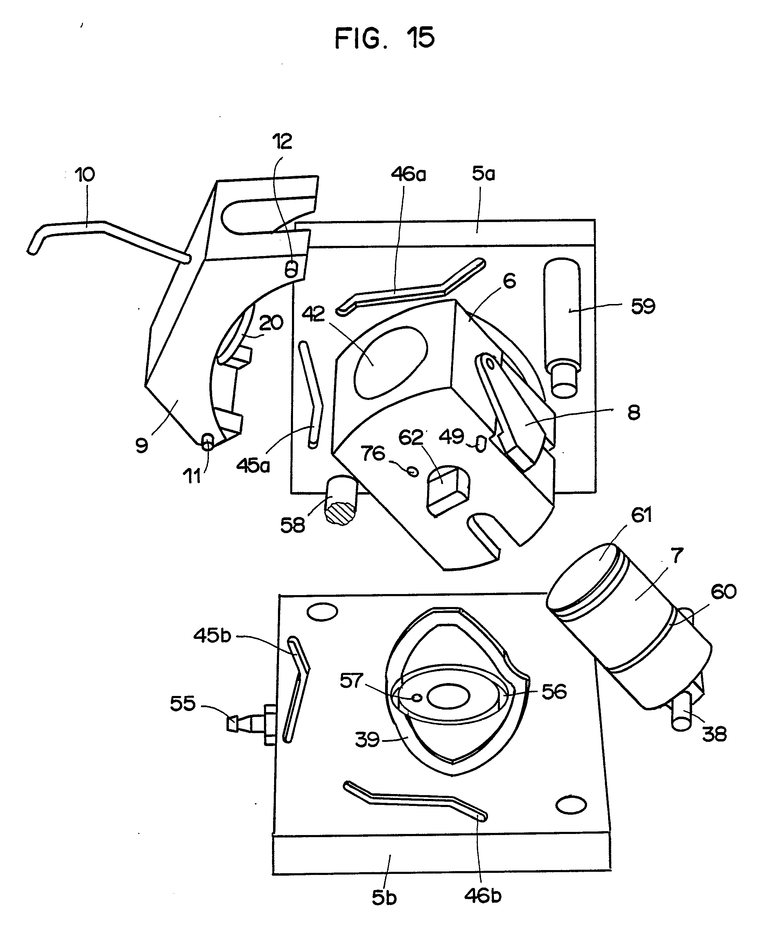

Aus Fig. 15 ist eine perspektivische Explosionsansicht der Brühvorrichtung des ersten Ausführungsbeispiels dargestellt. Aus dieser Fig. sind noch die beiden Streben 58 und 59 zum Verbinden der Ständerplatten 5a und 5b ersichtlich. Der Zylinder 7 ist mit einem Dichtungsring 60 versehen und weist an seinem dem

4

Kopfteil 9 zugewandten Ende eine Siebplatte 61 auf. Der Rotor 6 wird über ein Ansatzstück 62 von einem nicht dargestellten Motor angetrieben. Das Brühwasser gelangt vom Wasseranschluss 55 über die Leitung 57 und eine Bohrung 76 in die Brühkammer.

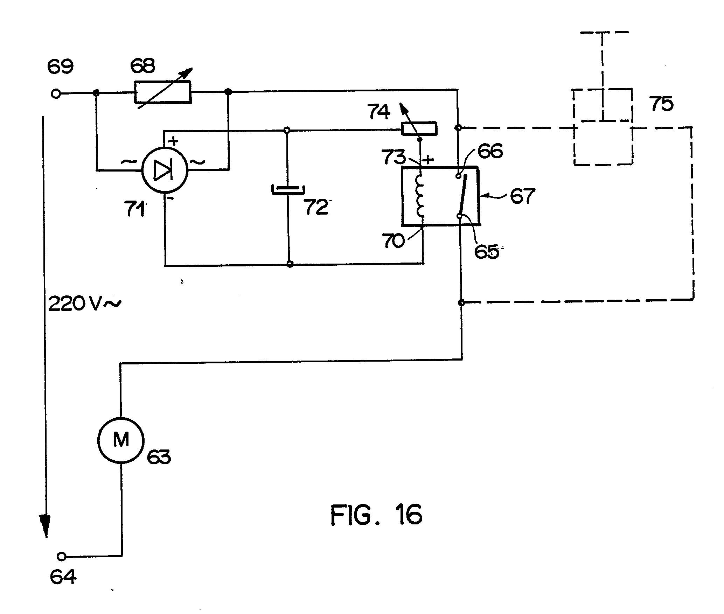

In Fig. 16 ist das Schaltschema der Abschalteinheit für das durch einen Motor 63 angetriebene Mahlwerk 18 dargestellt. Der Motor 63 ist mit der einen Anschlussklemme 64 für das Netz verbunden. Die Schalteranschlüsse 65 und 66 eines Relais 67 sind einerseits mit dem Motor 63 und andererseits über einen Potentiometer 68 mit der anderen Anschlussklemme 69 für das Netz verbunden. Ein Anschluss 70 der Erregerspule des Relais 67 ist mit einem Gleichrichter 71 sowie einem Kondensator 72 verbunden. Der andere Anschluss 73 der Erregerspule ist über einen variablen Widerstand 74 ebenfalls mit dem Gleichrichter 71 verbunden. Die übrigen zwei Anschlüsse des Gleichrichters sind mit dem Netzanschluss 69 resp. mit dem Anschluss 66 des Relaisschalters verbunden. Parallel zu den Anschlüssen 65 und 66 des Relais 67 ist eine Taste 75 angeschlossen.

Nach dem Mahlen der letzten durch die Dosiereinheit dem Mahlwerk zugeführten Bohne ändert die Stromaufnahme des Mahlwerkes, und dadurch wird dieses durch die Abschalteinheit abgestellt. Dadurch wird gewährleistet, dass keine Mischung der in den beiden Behälterabteilen 14 und 15 befindlichen Kaffeesorten erfolgt. Wichtig ist, dass das Mahlwerk erkennt, wenn die letzte Bohne gemahlen ist. Diese Steuerung resp. Abschaltung des Mahlwerkes könnte auch durch andere Mittel erfolgen. Beispielsweise könnte die letzte Bohne detektiert werden.

## Ansprüche

1. Kaffemaschine mit einem Gehäuse (21), einem Frischwasseranschluss bzw. einem Frischwasservorratstank (22), einem Heizorgan zur Erhitzung des Frischwassers, einem Mittel zur Förderung des erhitzten Frischwassers zu einer Brühvorrichtung (3) mit einem Getränkeauslass (10), einem Behälter (16) für Kaffeebohnen, einem Mahlwerk (18) für die Kaffeebohnen sowie mit Antriebs- und Steuermitteln für die Brühvorrichtung und das Mahlwerk, dadurch gekennzeichnet, dass der Behälter (16) für die Kaffeebohnen in mindestens zwei Abteile (14, 15) aufgeteilt ist, und dass durch Steuermittel (34, 35) betätigbare Auswahlorgane (30, 31; 28, 29) zur wahlweisen Zuführung mindestens eines Teils der in den Abteilen (14, 15) vorhandenen Kaffeebohnen zum Mahlwerk (18) vorhanden sind.

2. Kaffeemaschine nach Patentanspruch 1, gekennzeichnet durch eine Dosiereinheit (17) zur Dosierung der einem Abteil (14, 15) des Behälters (16) für die Kaffeebohnen entnommenen Menge.

3. Kaffeemaschine nach Patentanspruch 1 oder 2, gekennzeichnet durch Mittel zum Steuern resp. Abschalten des Mahlwerkes (18) nach dem Mahlen der letzten dem Mahlwerk zugeführten Kaffeebohne.

4. Kaffeemaschine nach Patentanspruch 3, gekennzeichnet durch eine Steuereinrichtung (63 - 75) zur Steuerung des Mahlwerks (18) über den Verlauf der Stromaufnahme.

5. Kaffeemaschine mit einem Gehäuse (21), einem Frischwasseranschluss bzw. einem Frischwasservorratstank (22), einem Heizorgan zur Erhitzung des Frischwassers, einem Mittel zur Förderung des erhitzten Frischwassers zu einer Brühvorrichtung (3) mit einem Getränkeauslass (10), einem Behälter (16) für Kaffeebohnen, einem Mahlwerk (18) für die Kaffeebohnen sowie mit Antriebs- und Steuermitteln für die Brühvorrichtung und das Mahlwerk, dadurch gekennzeichnet, dass die Brühvorrichtung einen Kopfteil (9) sowie einen in der Brühstellung mit dem Kopfteil zusammenwirkenden Rotor (6) umfasst, in welchem ein Zylinder (7) längsbeweglich angeordnet ist.

6. Kaffeemaschine nach Patentanspruch 5, dadurch gekennzeichnet, dass der Kopfteil (9) mittels Stiften (11, 12) in in einem Ständer (5) angeordneten Steuerkurven (45, 46) beweglich geführt ist.

7. Kaffeemaschine nach Patentanspruch 5 oder 6, dadurch gekennzeichnet, dass der Zylinder (7) mindestens einen in mindestens einer im Ständer (5) angeordneten Steuerkurve (39) geführten Steuernocken (38) aufweist.

8. Kaffeemaschine nach einem der Patentansprüche 5, 6 oder 7, dadurch gekennzeichnet, dass der Zylinder (7) einen Zylinderstössel (40) sowie einen Zylindermantel (41) umfasst, wobei zwischen dem Kopf (43) des Zylindermantels (41) und dem Zylinderstössel (40) ein Federelement (44) angeordnet ist.

9. Kaffeemaschine nach einem der Patentansprüche 5 bis 8, dadurch gekennzeichnet, dass am Rotor ein Organ (8) zur Blockierung des Zylinders (7) während des Brühvorgangs vorgesehen ist.

10. Kaffeemaschine nach Patentanspruch 9, dadurch gekennzeichnet, dass das Organ als zum Eingriff mit einem am Zylinder angeordneten Nocken (47) bestimmte Schwinge (8) ausgebildet ist.

11. Kaffeemaschine nach einem der Patentansprüche 5 bis 10, dadurch gekennzeichnet, dass die Brühvorrichtung zerlegbar ausgebildet ist.

FIG. 1

# FIG. 3

# FIG. 4

# FIG. 5

FIG. 6a

FIG. 6b

FIG. 7a

FIG. 7b

FIG. 7c

FIG. 8a

FIG. 8b

# FIG. 9

53

51

8

48

FIG. 11

XI

53

50     51

49

52

47

8

48

54

XI

FIG. 10

FIG. 12

FIG. 13

FIG. 14

## FIG. 15

EP 0 380 450 A2

FIG. 16